# EUROPÄISCHE PATENTSCHRIFT

(11) **EP 4 008 919 B1**
(45) Veröffentlichungstag und Bekanntmachung des Hinweises auf die Patenterteilung: **27.12.2023**
(21) Anmeldenummer: 21191748.9
(22) Anmeldetag: 17.08.2021
(51) Int. Cl.: F16C 19/18, F16C 25/06, F16C 33/60, F16C 35/063

(54) **VERFAHREN ZUR BEFESTIGUNG EINES GETEILTEN INNENRINGES AUF EINER WELLE**
METHOD FOR MOUNTING A SPLIT INNER RING ON A SHAFT
PROCÉDÉ DE FIXATION D'UNE BAGUE INTÉRIEURE DIVISÉE SUR UN ARBRE

(30) Priorität: 03.12.2020 DE 102020215271
(43) Veröffentlichungstag der Anmeldung: 08.06.2022
(73) Patentinhaber: VOLKSWAGEN AG, 38440 Wolfsburg (DE)
(72) Erfinder: Huk, André, 38110 Braunschweig (DE); Wünsch, Robert, 38102 Braunschweig (DE)

(56) Entgegenhaltungen:
- EP-A1- 2 171 296
- EP-A1- 2 270 349
- DE-A1- 2 932 248
- JP-A- 2015 124 787
- US-A1- 2020 094 869

## Beschreibung

Die vorliegende Erfindung betrifft ein Verfahren zur Befestigung eines geteilten Innenrings auf einer Welle sowie ein Verfahren zur Herstellung eines Zahnstangenlenksystems und ein Zahnstangenlenksystem nach den unabhängigen Ansprüchen.

Aus dem Stand der Technik ist es bekannt, geteilte Innenringe mittels einer Verschraubung auf einer Welle, beispielsweise einer Kurbelgewindemutter für Lenkungen, zu befestigen. Allerdings ist folglich die Vorspannung auf den Innenring so groß und derart schwer zu kontrollieren, dass eine negative Einflüsse auf das Laufverhalten des Lagers, beispielsweise in Bezug auf die Reibung und die Haptik, nicht zu vermeiden sind.

Die EP 2 270 349 A1 beschreibt eine Kugelmutter eines Kugelgewindegetriebes in einem Zahnstangenlenksystem gemäß dem Oberbegriff des Anspruchs 5 und ein Verfahren zur Befestigung eines geteilten Innenrings auf einer Welle mit Hilfe eines Rollierrings gemäß dem Oberbegriff des Anspruchs 1.

Die JP 2015/124 787 A beschreibt ein Verfahren einen inneren Lagerring zu fixieren.

In der DE 2 932 248 A wird hingegen eine Anordnung zum axialen Fixieren von Maschinenteilen auf Wellen beschrieben.

In der US 2020/009 4869 A1 wird ein elektrisches Servolenkgerät mit Zahnstangenunterstützung beschrieben, während in der WO 2009/000 308 A1 eine Vorrichtung zum axialen Vorspannen eines Maschinenelementes beschrieben wird.

Der vorliegenden Erfindung liegt somit die Aufgabe zugrunde, ein Verfahren zur Befestigung eines geteilten Innenrings derart zu verbessern, dass die Lagerspannung nach der Befestigung begrenzt und kontrolliert ist.

Gelöst wird die vorgenannte Aufgabe durch ein Verfahren zur Befestigung eines geteilten Innenrings auf einer Welle, wobei das Verfahren das Einrollieren eines Rollierrings umfasst, und zwar derart, dass der Rollierring mittelbar eine Bewegung des Innenrings in eine axiale äußere Richtung auf der Welle begrenzt.

Bei der Welle handelt es sich insbesondere um eine Kugelgewindemutter für ein Lenksystem, vorzugsweise ein Zahnstangenlenksystem. Der geteilte Innenring ist insbesondere Teil eines Lagers, vorzugsweise eines doppelreihigen Schrägkugellagers.

Unter dem Begriff "Umformieren" ist insbesondere ein kontinuierliches Umformverfahren zu verstehen. Ein Einpressen des Rollierrings ist nicht möglich, da dann die Presskräfte zu hoch wären. Daher wird ein Einrollieren, das heißt ein kontinuierliches Umformverfahren, verwendet, um den Rollierring umzuformen. Im Rahmen dieses Verfahrens wirken Wälzkörper auf den Rollierring, insbesondere auf mindestens eine Kante, und rollen unter einem axialen Vorschub in Richtung geteiltem Innenring auf und ab. Dadurch wird der Rollierring verformt, und zwar derart, dass er mittelbar, über ein Ausgleichselement, eine Bewegung in die axial äußere Richtung des Innenrings begrenzt.

Vorzugsweise ist der Innenring nicht mittels einer Verschraubung, bspw. über ein verschraubtes Element in axial äußere Richtung, bspw. eine Mutter, befestigt. Der geteilte Innenring ist somit sicher befestigt, während das Verfahren gleichzeitig einfach und somit kostengünstiger ist als eine Lösung mittels einer Verschraubung.

Das Verfahren kann insbesondere ein vorheriges Aufbringen des Innenrings auf die Welle und das vorherige Aufbringen des Rollierrings auf die Welle umfassen.

Insbesondere kann die Welle, auf der der Innenring und der Rollierring aufgebracht sind, eine Stufe aufweisen. Der geteilte Innenring ist derart auf die Welle aufgebracht sein, dass dieser in einem Abstand zur Stufe angeordnet ist.

Der Rollierring wird erfindungsgemäß derart umgeformt, dass zwischen dem Rollierring und dem Innenring ein Spalt ausgebildet ist. Erfindungsgemäß weist auch dann die Welle eine Stufe auf. Dann umfasst das Verfahren das Einbringen eines Ausgleichselementes in den Spalt. Bei dem Ausgleichselement handelt es sich insbesondere um ein Federelement, bspw. eine Wellfeder. Der Rollierring begrenzt somit in mittelbarer Weise, in anderen Worten über das Ausgleichselement, eine Bewegung des Innenrings in die axial äußere Richtung. In einem ersten Abschnitt, der an der Welle anliegt, liegt der Rollierring erfindungsgemäß an der Stufe an, während er sich in einem zweiten Abschnitt zwar geradlinig in radial äußerer Richtung über die Stufe hinaus erstreckt.

Insbesondere umfasst das Verfahren ein Einstellen einer Vorspannung des Innenrings mittels des angrenzenden Rollierrings oder des Ausgleichselementes. Die Vorspannkräfte können somit kontrolliert werden, sodass der Innenring wenig verformt und die Funktion des Lagers nicht beeinträchtigt ist. Das Einstellen der Vorspannung kann, wenn dieser die Bewegung des Innenrings direkt begrenzt, über das Material des Rollierrings erfolgen, das direkt in Kontakt mit dem Innenring kommt, oder über das Ausgleichselement.

In einem weiteren Aspekt betrifft die Erfindung ein Verfahren zur Herstellung eines Zahnstangenlenksystems umfassend eine Welle, wobei ein geteilter Innenring auf der Welle mittels eines Rollierrings nach einem oben beschriebenen Verfahren befestigt ist. Vorzugsweise ist die Welle und/oder der Innenring und/oder der Rollierring wie oben beschrieben ausgebildet. Das Zahnstangenlenksystem ist insbesondere für eine Antriebseinheit eines Fahrzeuges ausgebildet. In einem weiteren Aspekt betrifft die Erfindung ein Zahnstangenlenksystem, das einen oben beschriebenen mittels eines Rollierrings befestigten Innenring umfasst und/oder das wie oben beschrieben hergestellt wurde.

Es zeigen in rein schematischer Darstellung:
- Figur 1: ein Verfahrensschema eines erfindungsgemäßen Verfahrens;
- Figur 2: einen geteilten Innenring, der unmittelbar mittels eines rollierten Rollierrings nach dem Stand der Technik befestigt ist;
- Figur 3: eine Detailansicht der Figur 2;
- Figur 4: einen geteilten Innenring, der mittelbar mittels eines rollierten Rollierrings befestigt ist;
- Figur 5: eine Detailansicht der Figur 4.

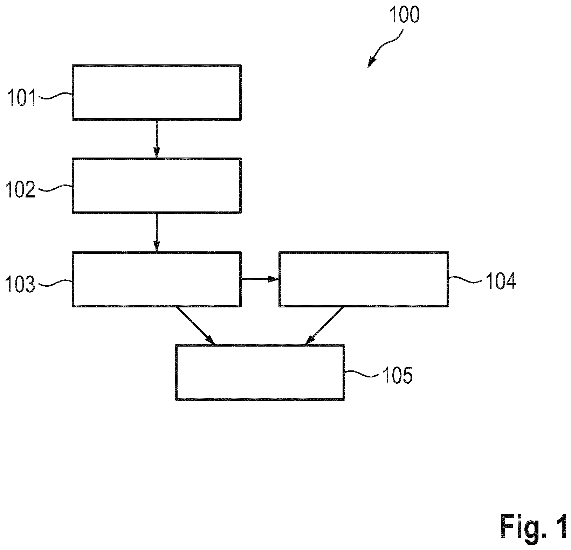

Figur 1 beschreibt ein erfindungsgemäßes Verfahren 100 zur Befestigung eines geteilten Innenrings 13 auf einer Welle 10. Dabei kann das Verfahren 100 das Aufbringen 101 des Innenrings 13 auf die Welle 10 umfassen. Insbesondere wird das gesamte Lager 12 aufgebracht. Ferner kann das Verfahren 100 das Aufbringen 102 eines Rollierrings 16 auf die Welle 10 umfassen.

Das Verfahren umfasst das Einrollieren 103 des Rollierrings 16, und zwar derart, dass ein Spalt 20 zwischen Innenring 13 und Rollierring 16 ausgebildet ist. Das Verfahren umfasst das Einbringen 104 eines Ausgleichselementes 21 in dem Spalt 20.

Ferner kann das Verfahren das Einstellen 105 einer Vorspannung des Innenrings 13 mittels des angrenzenden Rollierrings 16 oder des Ausgleichselementes 21 umfassen.

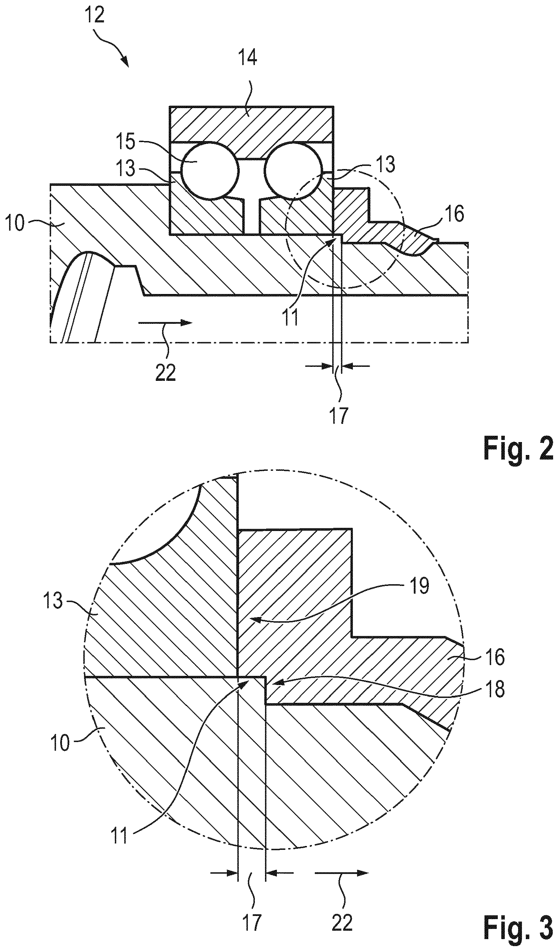

Figur 2 zeigt einen mittels eines Rollierrings 16 unmittelbar befestigten geteilten Innenring 13 nach dem Stand der Technik.

Der geteilte Innenring 13 ist Teil eines Lagers 12, das ferner einen Außenring 14 und einen Kugelkörper 15 umfasst. Der geteilte Innenring 13 ist auf der Welle 10 aufgebracht. Die Welle 10 umfasst eine Stufe 11. Der geteilte Innenring 13 ist derart auf die Welle 10 aufgebracht, dass dieser in einem Abstand 17 zur Stufe 11 angeordnet ist. Der Rollierring 16 ist derart umgeformt, dass dieser über die Stufe 11 hinweg in axial innere Richtung, das heißt in Richtung des geteilten Innenrings 13, über die Stufe 11 hervorragt.

Figur 3 zeigt eine Detailansicht der Figur 2, in der die Stufe 11 besser zu sehen ist. Deutlich ist zu sehen, wie der Rollierring 16 an seinem dem Innenring 13 zugewandten Ende einen ersten Abschnitt 18 aufweist, in dem dieser bündig an der Stufe 11 anliegt, und einen zweiten Abschnitt 19, in dem der Rollierring 16 über die Stufe 11 hinweg und über den Abstand 17 hervorragt, sodass dieser an dem geteilten Innenring 13 anliegt. Über das Material des Rollierrings 16 kann die Vorspannung auf den geteilten Innenring 13 eingestellt werden.

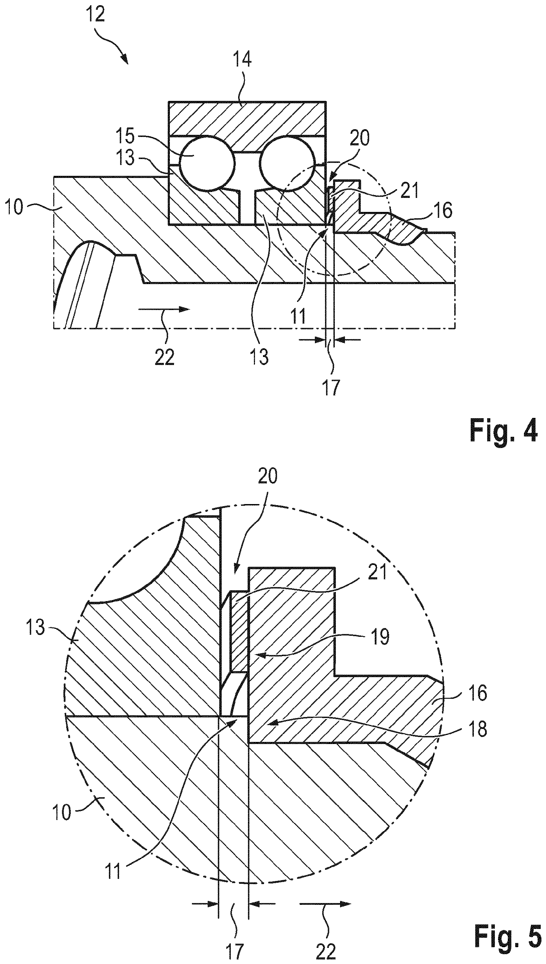

Figur 4 zeigt einen geteilten Innenring 13, der mittelbar mittels eines Rollierrings 16 auf einer Welle 10 befestigt ist. Und zwar ist der geteilte Innenring 13 wie bereits bezüglich Figur 2 beschrieben, in einem Abstand 17 zu einer Stufe 11 der Welle 10 angeordnet. Der Rollierring 16 ist derart umgeformt, dass dieser nicht über die Stufe 11 in axial innerer Richtung hervorragt, sondern in einem ersten Abschnitt 18 bündig an der Stufe 11 anliegt und in einem zweiten Abschnitt an dem Ende, das dem geteilten Innenring 13 zugewandt ist, im Abstand 17 zum Rollierring 16 angeordnet ist. Mit anderen Worten ist ein Spalt 20 zwischen dem geteilten Innenring 13 und dem Rollierring 16 ausgebildet, wobei die Breite des Spaltes 20 dem Abstand 17 entspricht.

In Figur 5 ist eine Detailansicht der Figur 4 zu sehen, in der deutlicher zu erkennen ist, dass ein Ausgleichselement 21 in den Spalt 20 eingebracht ist. Über das Ausgleichselement 21 kann die Vorspannung auf den geteilten Innenring 13 eingestellt werden.

### Bezugszeichenliste

- 100: erfindungsgemäßes Verfahren
- 101: Aufbringen des Innenrings auf die Welle
- 102: Aufbringen eines Rollierrings auf die Welle
- 103: Einrollieren des Rollierrings
- 104: Einbringen eines Ausgleichselementes in den Spalt
- 105: Einstellen einer Vorspannung des Innenrings mittels des angrenzenden Rollierrings oder des Ausgleichselementes

- 10: Welle
- 11: Stufe
- 12: Lager
- 13: geteilter Innenring
- 14: Außenring
- 15: Kugelkörper
- 16: Rollierring
- 17: Abstand
- 18: erster Abschnitt
- 19: zweiter Abschnitt
- 20: Spalt
- 21: Ausgleichselement
- 22: axial äußere Richtung

## Patentansprüche

1. Verfahren (100) zur Befestigung eines geteilten Innenringes (13) auf einer Welle (10), wobei das Verfahren (100) ein Einrollieren (103) eines Rollierrings (16) umfasst,
und zwar derart, dass der Rollierring (16) mittelbar eine Bewegung des Innenrings (13) in eine axial äußere Richtung (22) begrenzt.
**dadurch gekennzeichnet, dass**
die Welle (10) eine Stufe (11) aufweist,
wobei der Rollierring (16) derart umgeformt wird,
dass zwischen dem Rollierring (16) und dem Innenring (13) ein Spalt (20) ausgebildet ist, und dass der Rollierring in einem ersten Abschnitt, der an der Welle anliegt, an der Stufe anliegt, und wobei sich der Rollierring in einem zweiten Abschnitt geradlinig in radial äußerer Richtung über die Stufe hinaus erstreckt,
wobei das Verfahren (100) das Einbringen (104) eines Ausgleichselementes (21) in den Spalt (20) umfasst.

2. Verfahren (100) nach Anspruch 1,
**dadurch gekennzeichnet, dass**
der Innenring (13) nicht mittels einer Verschraubung befestigt wird.

3. Verfahren (100) nach Anspruch 1,
**dadurch gekennzeichnet, dass**
das Verfahren (100) ein Einstellen (105) einer Vorspannung des Innenrings (13) mittels des angrenzenden Rollierrings (16) oder des Ausgleichselementes (21) umfasst.

4. Verfahren zur Herstellung eines Zahnstangenlenksystems umfassend eine Welle (10),
**dadurch gekennzeichnet, dass**
ein geteilter Innenring (13) auf der Welle (10) mittels eines Rollierrings (16) nach einem Verfahren der Ansprüche 1 bis 3 befestigt wird.

5. Zahnstangenlenksystem,
**dadurch gekennzeichnet, dass**
das Zahnstangenlenksystem einen nach einem Verfahren der Ansprüche 1 bis 4 mittels eines Rollierrings (16) befestigten Innenring (13) umfasst.

## Claims

1. Method (100) for fastening a split inner ring (13) to a shaft (10),
wherein the method (100) comprises rolling in (103) a rolling ring (16), specifically in such a way that the rolling ring (16) indirectly limits a movement of the inner ring (13) in an axially outer direction (22),
**characterized in that**
the shaft (10) has a step (11),
wherein the rolling ring (16) is deformed in such a way
that a gap (20) is formed between the rolling ring (16) and the inner ring (13) and that, in a first section, which bears against the shaft, the rolling ring bears against the step, and wherein, in a second section, the rolling ring extends rectilinearly beyond the step in a radially outer direction,
wherein the method (100) comprises introducing (104) a compensation element (21) into the gap (20).

2. Method (100) according to Claim 1,
**characterized in that**
the inner ring (13) is not fastened by means of a screw connection.

3. Method (100) according to Claim 1,
**characterized in that**
the method (100) comprises setting (105) a preload of the inner ring (13) by means of the adjacent rolling ring (16) or of the compensation element (21) .

4. Method for producing a rack-and-pinion steering system comprising a shaft (10),
**characterized in that**
a split inner ring (13) is fastened to the shaft (10) by means of a rolling ring (16) according to a method of Claims 1 to 3.

5. Rack-and-pinion steering system,
**characterized in that**
the rack-and-pinion steering system comprises an inner ring (13) which is fastened by means of a rolling ring (16) according to a method of Claims 1 to 4.

## Revendications

1. Procédé (100) permettant de fixer une bague intérieure divisée (13) sur un arbre (10), le procédé (100) comprenant le roulage (103) d'une bague de roulage (16), notamment de telle sorte que la bague de roulage (16) limite directement un mouvement de la bague intérieure (13) dans une direction (22) axialement extérieure,
**caractérisé en ce que** l'arbre (10) présente un gradin (11),
dans lequel la bague de roulage (16) est façonnée de telle sorte qu'un interstice (20) est réalisé entre la bague de roulage (16) et la bague intérieure (13), et que la bague de roulage est adjacente au gradin dans une première partie qui est adjacente à l'arbre, et dans lequel la bague de roulage s'étend dans une deuxième partie en ligne droite dans une direction radialement extérieure au-delà du gradin,
dans lequel le procédé (100) comprend l'insertion (104) d'un élément de compensation (21) dans l'interstice (20).

2. Procédé (100) selon la revendication 1, **caractérisé en ce que** la bague intérieure (13) n'est pas fixée au moyen d'un vissage.

3. Procédé (100) selon la revendication 1, **caractérisé en ce que** le procédé (100) comprend le réglage (105) d'une précontrainte de la bague intérieure (13) au moyen de la bague de roulage adjacente (16) ou de l'élément de compensation (21).

4. Procédé permettant de fabriquer un système de direction à crémaillère, comprenant un arbre (10), **caractérisé en ce qu'**une bague intérieure divisée (13) est fixée sur l'arbre (10) au moyen d'une bague de roulage (16) selon un procédé des revendications 1 à 3.

5. Système de direction à crémaillère, **caractérisé en ce que** le système de direction à crémaillère comprend une bague intérieure (13) fixée au moyen d'une bague de roulage (16) selon un procédé des revendications 1 à 4.
